(19) Europäisches Patentamt
European Patent Office
Office européen des brevets

(11) **EP 3 661 236 A1**

(12) **EUROPEAN PATENT APPLICATION**

(43) Date of publication:
**03.06.2020 Bulletin 2020/23**

(51) Int Cl.:
***H04W 4/021*** *(2018.01)*

(21) Application number: **19211150.8**

(22) Date of filing: **25.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2018 TW 107142257**

(71) Applicant: **Hsin Chu Chen Industrial Co. Ltd.
Taichung City 43643 (TW)**

(72) Inventor: **HUANG, Jung-Tang
. Taipei (TW)**

(74) Representative: **Wittmann, Günther
Patentanwaltskanzlei Wittmann
Frans-Hals-Straße 31
81479 München (DE)**

(54) **ELECTRONIC FENCE AND ELECTRONIC FENCE SYSTEM**

(57) The present invention discloses an electronic fence and an electronic fence system, wherein the electronic fence includes: a plurality of signal transmitters disposed on the ground to define a fence area having a boundary; a signal receiver disposed on the vehicle and configured to receive a transmit signal of each of the plurality of signal transmitters; a processor coupled to the signal receiver, which determines whether the vehicle is in the fence area according to the transmitted signal strength of each signal transmitter received by the receiver. The invention defines a fence area with a boundary by providing a plurality of signal emitters on the ground, so that the RSSI information can determine whether the vehicle is in the fence area, which not only has high recognition accuracy, but also is simple to install, easy to maintain.

*FIG.9*

**Description**

BACKGROUND OF THE INVENTION

1. Field of the Invention

The present invention generally relates to the field of shared vehicle technologies; in particular, it relates to an electronic fence and an electronic fence system.

2. Description of Related Art

With the rapid development of shared vehicles, a type of electronic fence systems has been created for the return of shared vehicles. At present, such electronic fence systems generally utilize GPS positioning processes to determine whether the shared vehicle is still placed in a prescribed area, but, due to insufficient accuracy, this method is only suitable for rough or wide-ranging applications.

In addition, the currently available electronic fence systems may also apply ultrasonic or infrared light technologies to identify whether the shared vehicle is still located in a prescribed area, but, for such approaches, ultrasonic waves or infrared rays need to be bundled thereby forming a limiting plane, which means rows of emitters and receivers are required, and precise alignments are needed as well; hence, difficulties in installation operations become inevitable, and it is also challenging for subsequent maintenance tasks and costs are undesirably elevated.

SUMMARY OF THE INVENTION

The present invention aims to solve at least one of the aforementioned technical problems in the prior art technologies to a certain extent. To this end, it is an objective of the present invention to provide an electronic fence system that defines a fence area having a boundary by providing a plurality of signal transmitters on the ground. Accordingly, it is possible to determine whether the vehicle is in the fence area by using RSSI (Received Signal Strength Indication) information, which not only enables high recognition accuracy, but also is simple to install and easy to maintain, and allows reduced costs.

The second objective of the present invention is to provide an electronic fence system.

To achieve the above-said objective, the first embodiment of the present invention provides an electronic fence system, comprising: a plurality of signal transmitters, disposed on the ground to define a fence area having a boundary; a signal receiver, disposed on a vehicle, and the signal receiver is configured to receive transmission signals sent by each of the signal transmitters; a processor, connected to the signal receiver and configured to determine whether the vehicle is in the fence area according to the transmitted signal strength of each of the signal transmitters received by the signal receiver.

To achieve the above-said objective, an alarm system in the electronic fence system according to an embodiment for the second aspect of the present invention is provided, comprising: the aforementioned electronic fence system and the vehicle, wherein the vehicle is installed with an electronic vehicle identification and an alarm component, and the electronic vehicle identification, including electronic license plate is connected to the alarm component, and wherein, after the vehicle is parked in the fence area, the signal transmitters (signal transmitters are disposed around the fence area in the form of road studs or ground lamps) maintains a connection state with the electronic vehicle identification, such that, in case it is determined that the vehicle has been illegally dragged away from the fence area, the alarm component can be controlled by the electronic vehicle identification in order to issue an alarm prompt.

For the alarm system of the electronic fence system according to the embodiment of the present invention, since the electronic vehicle identification and the alarm component are installed on the vehicle, when the vehicle is parked in the fence area, the signal transmitters of the electronic fence system can be kept in a connection state with the electronic vehicle identification, and in case it is determined that the vehicle has been illegally dragged away from the fence area, the alarm component can be controlled by the electronic vehicle identification to order to issue an alarm prompt, such that it is possible to enable effective monitoring of the vehicle parked in the electronic fence system so as to prevent theft events, thus offering greatly improved security.

It can be seen that, in the electronic fence system according to the embodiment of the present invention, by configuring a plurality of signal transmitters on the ground to define a fence area having a boundary, and by installing a signal receiver on the vehicle to receive the transmission signals from each of the signal transmitters, the processor can determine whether the vehicle is in the fence area based on the signal strength of each signal transmitter received by the receiver. Therefore, not only the recognition accuracy can be enhanced, but also the installation operations can be simple, the maintenance processes can be easy, and the costs can be reduced, thus offering great convenience to the user for returning the borrowed vehicle.

Optionally, each of the plurality of signal transmitters is disposed in the form of a road stud around the fence area.

Optionally, a directional antenna is configured in the road stud so as to transmit a positioning signal into the fence area.

Optionally, the vehicle is a shared transportation tool.

Optionally, the above-said shared transportation tool is a shared bicycle installed with an electronic vehicle identification, and the signal receiver and the processor are both integrated in the electronic vehicle identification, such that, when the intensity of each transmitted signal received by the electronic vehicle identification exceeds a preset threshold, it is determined that the shared bicycle is in the fence area and the shared bicycle is allowed to be locked and returned.

Optionally, the electronic vehicle identification further wirelessly communicates with a mobile device so that, after the shared bicycle has been successfully locked and returned, it can send a bicycle-return-success-information to the mobile device.

Optionally, the mobile device further wirelessly communicates with a cloud server so as to send a shared bicycle information indicating a successful bicycle return to the cloud server, in which the shared bicycle information indicating a successful bicycle return includes the positioning information of the shared bicycle.

Optionally, one of the plurality of signal transmitters can be configured in the form of ground lamp (e.g., underground lamp, or in-ground lamp), and the ground lamp wirelessly communicate with the electronic vehicle identification in order to receive the bicycle-return-success-information sent by the electronic vehicle identification, and then, by means of the wireless communication with the cloud server, a shared bicycle information indicating a successful bicycle return can be transmitted to the cloud server, wherein the shared bicycle information indicating a successful bicycle return includes the positioning information of the shared bicycle.

Optionally, the above-said ground lamp can further record the number of shared bicycles that have been parked in the fence area, and in case that the number of shared bicycles that have been parked in the fence area reaches a preset maximum parking number, it is possible, through the electronic vehicle identification, to prohibit the shared bicycle from being locked and returned in the fence area.

Moreover, in order to achieve the above-said objective, an embodiment according to the third aspect of the present invention also provides an electronic fence system including the aforementioned electronic fence system and the vehicle.

As such, with the electronic fence system, the electronic fence system according to the embodiment of the present invention can accurately determine whether the vehicle is located in the fence area, thereby enabling high recognition accuracy, simple installation operations, easy maintenance tasks, and effectively reduced costs. In this way, it is possible to provide great convenience to users for returning the borrowed vehicle.

BRIEF DESCRIPTION OF THE DRAWINGS

Figure 1 is a block schematic diagram of an electronic fence system in accordance with an embodiment of the present invention;

Figure 2A is a top view of an electronic fence system in accordance with an embodiment of the present invention;

Figure 2B is a lateral view of an electronic fence system in accordance with an embodiment of the present invention;

Figure 3 is a schematic view of the road stud installed with a directional antenna in accordance with an embodiment of the present invention;

Figure 4 is a view of an electronic fence system in accordance with another embodiment of the present invention;

Figure 5 is a shared bicycle schematic view in accordance with an embodiment of the present invention, in which the electronic fence system is managed by means of the ground lamp interacting with the cloud through the LORA/NBIOT method;

Figure 6 is a view of ground lamp power supply in accordance with an embodiment of the present invention;

Figure 7 is a view of ground lamp power supply in accordance with another embodiment of the present invention;

Figure 8 is a block schematic diagram of the alarm system in the electronic fence system in accordance with an embodiment of the present invention;

Figure 9 is a schematic view for the interactions between various shared transportation tools on the road and the ground lamp in the electronic fence system in accordance with an embodiment of the present invention.

DETAILED DESCRIPTION OF THE PREFERRED EMBODIMENTS

The embodiments of the present invention are described in detail hereunder, and the examples of such embodiments are illustrated in the accompanying drawings, wherein the same or similar reference numerals are marked in order to refer to the same or similar components or alternatively components enabling the same or similar functions. It should be appreciated that the embodiments described below with reference to the accompanying drawings are intended to be illustrative for the present invention, and are not to be construed as restrictions thereof.

And It can be seen that, in the electronic fence system according to the embodiment of the present invention, by configuring a plurality of signal transmitters on the ground to define a fence area having a boundary, and by installing a signal receiver on the vehicle to receive the transmission signals from each of the signal transmitters, the processor can determine whether the vehicle is in the fence area based on the signal strength of each signal transmitter received by the receiver. Therefore, not only the recognition accuracy can be enhanced, but also the installation operations can be simple, the maintenance processes can be easy, and the costs can be reduced, thus offering great convenience to the user for returning the borrowed vehicle.

In order to better understand the above-described technical solutions, exemplary embodiments of the present invention will be described in more detail hereunder with reference to the accompanying drawings. Although the exemplary embodiments of the present invention have been shown and described with reference to the accompanying drawings, it should be understood that the present invention can be implemented in various forms and is not limited by the embodiments set forth herein. On the contrary, such embodiments are provided so that the present invention may be more fully understood and the scope of the invention can be fully conveyed by those skilled ones in the art.

Hence, for better understanding the aforementioned technical solutions, the above-said technical solutions will be described in detail below in conjunction with the accompanying drawings and specific embodiments.

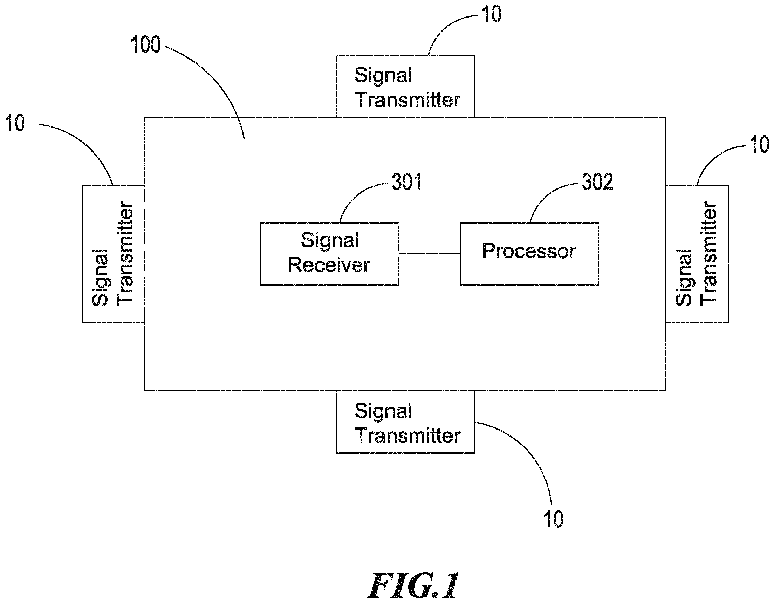

First, refer to Figure 1, wherein a block schematic diagram of an electronic fence system in accordance with an embodiment of the present invention is shown. As shown in Figure 1, the illustrated electronic fence system comprises a plurality of signal transmitters 10, a signal receiver 301 and a processor 302.

Herein the plurality of signal transmitters 10 are installed on the ground 4 in order to define a fence area 100 having a boundary, the signal receiver 301 is set up on the vehicle, and the signal receiver 301 can be configured to receive transmission signals from each of the plurality of signal transmitters; in addition, the processor 302 can be connected to the signal receiver 301 and determine whether the vehicle is in the fence area 100 based on the transmission signal strength from each of the signal transmitters 10 received by the signal receiver 301.

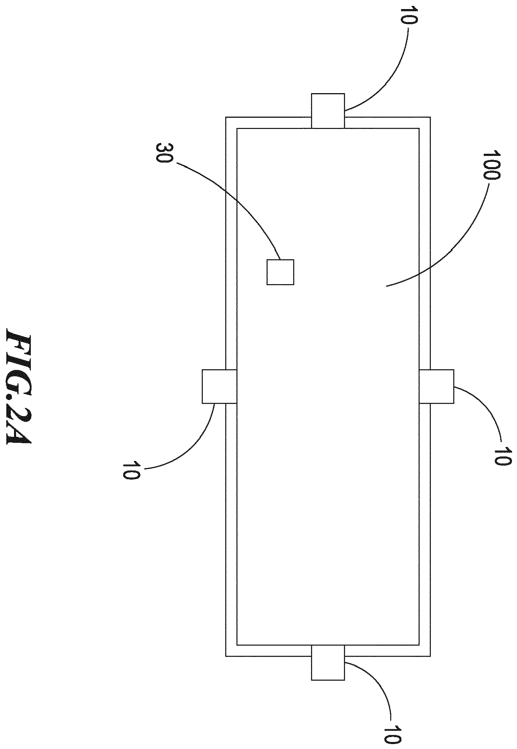

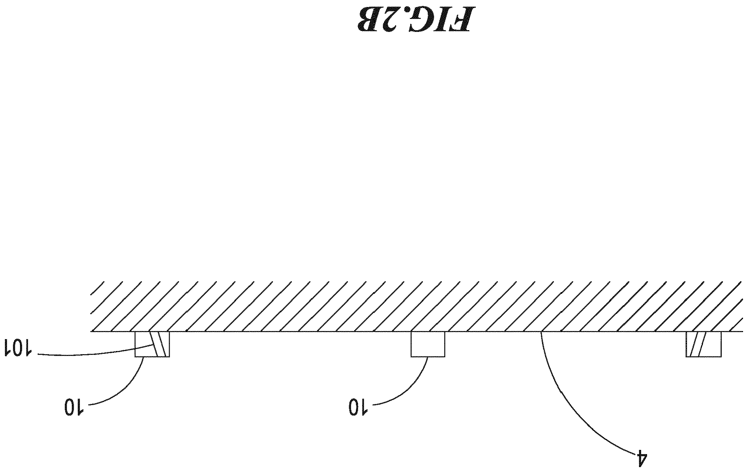

According to an embodiment of the present invention, as shown in Figures 2A and 2B, each of the plurality of signal transmitters 10 is disposed in the form of the road stud or a ground lamp around the fence area 100, and such signal transmitters 10, 20 can be components that simply transmit signals or that can transmit and receive signals. In the present embodiment, the road stud is used as a component that simply transmits signals, and the ground lamp is used as an element capable of transmitting and receiving signals; however, the ground lamp can also be used as a component that simply transmits signals, or the road stud is used as an element capable of transmitting and receiving signals.

As an example, four signal transmitters 10 (or road studs, such as Bluetooth road studs) may be installed respectively around the fence area 100.

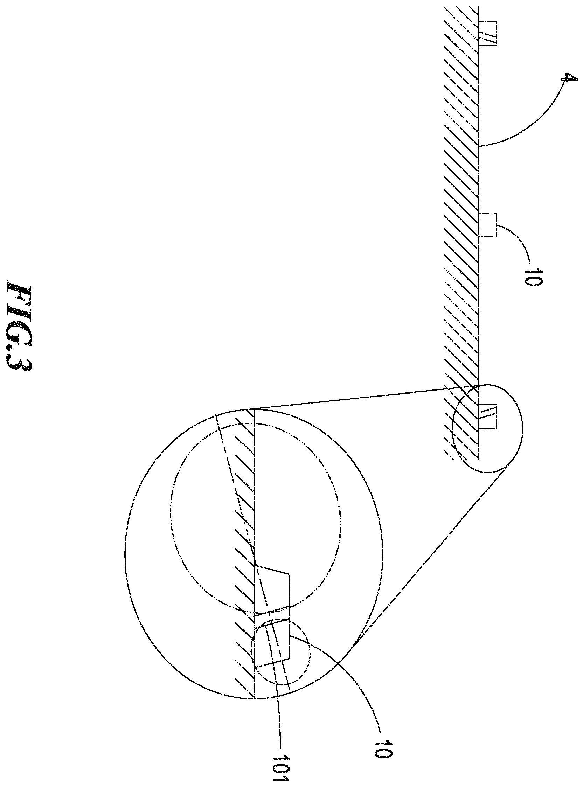

Moreover, as shown in Figure 3, a signal transmitter 10 (a road stud, such as a Bluetooth road stud) is taken as an example, and a directional antenna 101 can be set up in the signal transmitter 10 thereby transmitting positioning signals into the fence area 100. Herein the specification of the installed directional antenna may be a grounded antenna that transmits and receives in a range of at least 10 meters, a field type of 180 degrees, and of a relatively small volume.

As an example, the vehicle can be a shared vehicle. The shared vehicle can be, e.g., an electric or non-electric bicycle, a locomotive, a wheelchair, a scooter, or the like. Hereinafter, the present invention will be described by taking only a shared bicycle as an example, but is not limited thereto.

Also, the shared bicycle is installed with an electronic vehicle identification, and the signal receiver 301 and the processor 302 are both integrated in the electronic vehicle identification, such that, when the intensity of each transmitted signal received by the electronic vehicle identification exceeds a preset threshold, it is determined that the shared bicycle is in the fence area 100 and the shared bicycle is allowed to be locked and returned.

Specifically, as shown in Figures 2A and 2B, four signal transmitters 10 (road studs, such as Bluetooth road studs) with directional antennas all transmit positioning signals to the electronic vehicle identification 30 located in the fence area 100. At this time, if the shared bicycle is in the fence area 100, the electronic vehicle identification 30 can receive the broadcast signals coming from the four signal transmitters 10, and all of the RSSI thereof exceed the preset threshold so as to allow the vehicle to be returned. Then, the electronic vehicle identification 30 can transmit the packet information of the parked bicycle to the Bluetooth bicycle lock of the shared bicycle, and the rider may lock and return the shared bicycle. Finally, the Bluetooth bicycle lock can also send the locking-success-information to the electronic vehicle identification such that the electronic vehicle identification can know the bicycle-return-success-information.

In an embodiment of the present invention, the electronic vehicle identification further can wirelessly communicate with a mobile device so that, after the shared bicycle has been successfully locked and returned, it can send a bicycle-return-success-information to the mobile device.

In addition, the mobile device can further wirelessly communicate with a cloud server so as to send a shared bicycle information indicating a successful bicycle return to the cloud server, in which the shared bicycle information indicating a successful bicycle return includes the positioning information of the shared bicycle.

That is, after knowing that the shared bicycle is locked successfully, the electronic vehicle identification sends a bicycle-return-success-information to the mobile device, such as the user's mobile phone, to inform that it has been locked, indicating that the shared bicycle has been parked in the fence area of the electronic fence system, and the mobile phone can transmit the shared bicycle information to the cloud server in order to complete shared bicycle return process and to provide the positioning information of the returned bicycle to the cloud server.

It can be understood that, in the embodiment of the present invention, if the electronic vehicle identification is outside the fence area, the electronic vehicle identification can be determined to be at least unable to receive the broadcast signal from one of the road studs, or among the received broadcast signals, at least one signal has a small RSSI. In this case, the electronic vehicle identification will not send the packet information of the bicycle-parking-success to the Bluetooth bicycle lock, nor can it send the bicycle-return-success-information to the mobile phone, so that the bicycle-returning process on the cloud side cannot be completed.

Furthermore, in an embodiment of the present invention, the electronic vehicle identification can be combined with the Bluetooth bicycle lock to share the Bluetooth module, the battery, etc., so as to reduce the cost and avoid the wireless transmissions between the two.

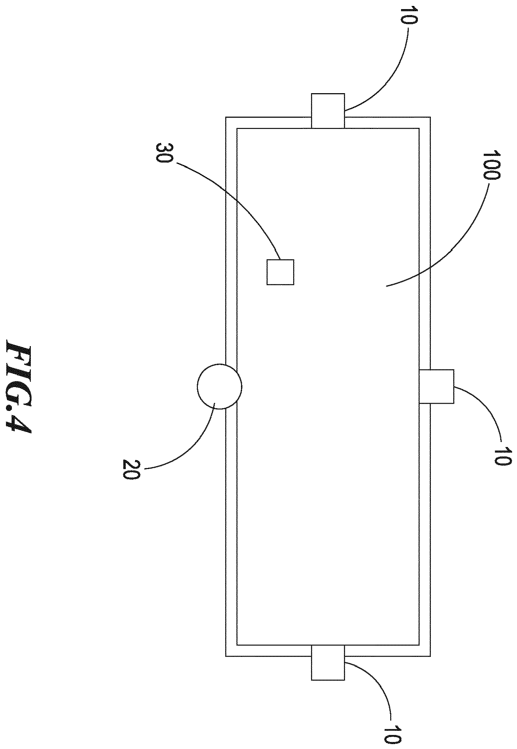

In another embodiment of the present invention, as shown in Figure 4, one of the plurality of signal transmitters 10 can be configured in the form of signal transmitter 20 (i.e., a ground lamp), and the signal transmitter 20 (ground lamp) can wirelessly communicate with the electronic vehicle identification 30 in order to receive the bicycle-return-success-information sent by the electronic vehicle identification 30, and then, by means of the wireless communication with the cloud server, a shared bicycle information indicating a successful bicycle return can be transmitted to the cloud server, wherein the shared bicycle information indicating a successful bicycle return includes the positioning information of the shared bicycle.

Specifically, as in conjunction shown in Figure 4, three signal transmitters 10 (road studs, such as Bluetooth road studs) may be respectively installed around the fence area 100, and one of such signal transmitters 20 may be provided in the form of a ground lamp. In this way, the signal transmitter 20 (ground lamp, e.g., a Bluetooth ground lamp) can receive the bicycle return information from the electronic vehicle identification 30, and then the signal transmitter 20 (ground lamp) can transmit the shared bicycle information indicating success bicycle return to a cloud server. Herein the signal transmitter 20 (ground lamp) can adopt the dual Bluetooth communication mode, and applies the Internet of Things 3G/4G/5G or WIFI or Low Power Wide Area Network (LPWAN), such as LORA or NBIOT, in order to communicate with the cloud server.

Further, three signal transmitters 10 (e.g., road studs, such as Bluetooth road studs) respectively having a directional antenna, as well as a signal transmitter 20 (e.g., a ground lamp, such as a Bluetooth ground lamp) with a directional antenna, all transmit positioning signals towards the inside of the fence area to the electronic vehicle identification. At this moment, if the intensity of each transmitted signal received by the electronic vehicle identification exceeds a preset threshold, it is determined that the shared bicycle is in the fence area and the shared bicycle is allowed to be locked and returned.

Suppose the electronic vehicle identification 30 is outside the fence area 100, it can be determined that the electronic vehicle identification 30 cannot receive at least one broadcast signal coming from one of the directional antennas 101; for example, the electronic vehicle identification 30 may be located on the right side outside the fence area, and the broadcast signals coming from the directional antenna of the signal transmitter 10 (a road stud, such as a Bluetooth road stud) cannot be obtained, or its RSSI will be below a preset threshold. In this case, the electronic vehicle identification 30 will not send the packet information of the bicycle-parking-success to the Bluetooth bicycle lock, nor can it send the bicycle-return-success-information to the mobile phone, so that the bicycle-returning process on the cloud side cannot be completed. Therefore, the user needs to park the shared bicycle in the fence area to return the vehicle.

In an embodiment of the present invention, the above-said ground lamp can further record the number of shared bicycles that have been parked in the fence area, and in case that the number of shared bicycles that have been parked in the fence area reaches a preset maximum parking number, it is possible, through the electronic vehicle identification, to prohibit the shared bicycle from being locked and returned in the fence area.

In other word, even if the shared bicycle is parked in the fence area, the maximum number of parking spaces in the fence area should be also considered, and if it is exceeded, the shared bicycle parking is still not allowed. Specifically, after the shared bicycle has been successfully returned to the fence area, the electronic vehicle identification is required to inform the ground lamp that the ground lamp needs to operate for recording such that the ground lamp can know the number of shared bicycles that have been parked in the fence area, thereby determining whether the maximum number of parking has been exceeded.

Alternatively, in another embodiment of the present invention, it may be notified by the cloud server whether the maximum number of parkings has been exceeded, and then the mobile phone is informed whether it is allowed to park the borrowed bicycle. Or else, before the bicycle can be parked, the cloud server can inform the fence area of the electronic fence system that it is not allowed to park into the shared bicycle, and it is necessary to find another adjacent electronic fence system or wait for someone to borrow a bicycle in order to create an available space for parking.

If it is allowed to park the shared bicycle, the information of the bicycle parking can be transmitted to the Bluetooth lock of the shared bicycle, and the user can lock the shared bicycle, and finally the Bluetooth lock can also send the lock-success-information to the electronic vehicle identification so the electronic vehicle identification to receive the bicycle-return-success-information.

Subsequently, the electronic vehicle identification sends the bicycle-return-success-information to the ground lamp, and the ground lamp transmits the information to the cloud server, thereby completing the bicycle return process and providing the positioning information of the returned bicycle location to the cloud server. Or otherwise, the electronic vehicle identification sends the bicycle-return-success-information to the mobile phone, and the mobile phone transmits the information to the cloud server, thereby completing the bicycle return process and providing the positioning information of the returned bicycle location to the cloud server.

It can be seen that, in the electronic fence system according to the embodiment of the present invention, by configuring a plurality of signal transmitters on the ground to define a fence area having a boundary, and by installing a signal receiver on the vehicle to receive the transmission signals from each of the signal transmitters, the processor can determine whether the vehicle is in the fence area based on the signal strength of each signal transmitter received by the receiver. Therefore, not only the recognition accuracy can be enhanced, but also the installation operations can be simple, the maintenance processes can be easy, and the costs can be reduced, thus offering great convenience to the user for returning the borrowed vehicle.

Moreover, an embodiment of the present invention also provides an electronic fence system comprising the aforementioned electronic fence system and the vehicle.

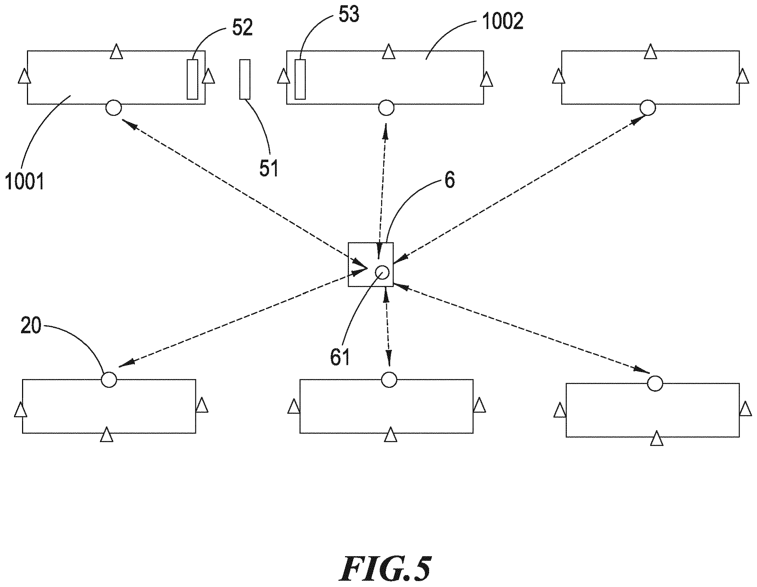

In an embodiment of the present invention, a plurality of electronic fence systems may be provided for places where stations, docks, school gates, markets, parks, and the like are required to share a high amount of bicycles. Referring to Figure 5, if the shared bicycle 51 is parked between the fence area 1001 and the fence area 1002, a complete set of broadcast messages of the road studs provided by the fence area 1001 and the fence area 1002 can be simultaneously received. For the shared bicycle 51, as long as there is a complete road stud RSSI, it can be sent to the corresponding ground lamp to calculate, and then so long as one of the ground lamps responds in the fence area to which it belongs, the return process is allowed to operate.

Therefore, in this case, the shared bicycle 51 is unable to obtain the return permit offered by the fence area 1001 or the fence area 1002. However, the shared bicycle 52 can obtain the return permission given by the fence area 1001, but the return permission granted by the fence area 1002 cannot be obtained, and the shared bicycle 53 can obtain the return permission given by the fence area 1002, but the return permission granted by the fence area 1001 cannot be obtained.

Therefore, the units of the electronic fence system can be expanded laterally, as small as one unit, e.g., an area of 10m × 2m, and then several units may be connected in series.

Specifically, the fence area of the electronic fence system has an area of 10m (Length) × 2m (Width) as a unit, and 4-6 Bluetooth road studs are installed at the boundary of the fence area, one of which has a function of a router such as a road stud, thereby communicating with the electronic vehicle identification on the shared bicycle and also communicating with the cloud server via LORA or NBIOT or WIFI, or otherwise 3G/4G/5G telecommunications in order to implement cloud payment or reservation services.

As such, with the electronic fence system, the electronic fence system according to the embodiment of the present invention can accurately determine whether the vehicle is located in the fence area, thereby enabling high recognition accuracy, simple installation operations, easy maintenance tasks, and effectively reduced costs. In this way, it is possible to provide great convenience to users for returning the borrowed vehicle.

An embodiment according to another feature of the present invention further provides an electronic fence system, comprising a plurality of signal transmitters and a signal receiver, wherein the plurality of signal transmitters are disposed on the ground to define a fence area having a boundary, and one of the plurality of signal transmitters is configured in the form of a ground lamp which stores a hyperplane model for determining the inside and the outside of the fence area; in addition, the signal receiver is set up on a vehicle and configured to receive the transmission signals coming from each of the plurality of signal transmitters, and sends the signals of each signal transmitter to the electronic vehicle identification on the vehicle, the electronic vehicle identification can wirelessly communication with the ground lamp to transmit the transmission signals of each signal transmitter to the ground lamp, and the ground lamp determines whether the vehicle is within the fence area according to the received signals of signal transmitters and the hyperplane model.

As shown in Figure 4, the rest signal transmitters of the plurality of signal transmitters are configured in the form of a road stud and installed around the fence area along with the ground lamp.

That is, the number of such a plurality of signal transmitters 10 may be four, and three of the four signal transmitters are provided in the form of road studs such as Bluetooth road studs, and the remained one is provided in the form of a ground lamp.

Herein the electronic vehicle identification receives the transmission signals of the four signal transmitters RSSI-1, RSSI-2, RSSI-3 and RSSI-4, and transmits to the ground lamp which determines, based on the hyperplane model stored in its memory, whether the shared bicycle is located inside the fence area or outside the fence area; the applied determination method may be SVM (Support Vector Machine) algorithm, or other classifier algorithms, such as linear classifiers (Fisher's linear discriminant, Logistic Regression, Naive Bayes classifier, Perceptron); Support Vector Machines (Least squares support vector machines); Quadratic classifiers; Kernel estimation (k-nearest neighbor); Boosting (meta-algorithm); Decision trees (Random forests); Learning vector quantization; Neural Networks; Deep Learning ... etc.

Specifically, taking the SVM algorithm as an embodiment, the decision function is as follows:

$$\mathcal{D}(\vec{x}_t) = \sum_{i=1}^{200} \alpha_i y_i K(\vec{x}_i, \vec{x}_t) + b$$

Herein,

$$\vec{x}_i$$

indicates the training data set, possibly including 200 training data items, and

$$\vec{x}_t$$

represents the testing data set, the core function

$$K(\vec{x}_i, \vec{x}_t) = e^{-\frac{\|\vec{x}_i - \vec{x}_t\|^2}{2\sigma^2}} \ ,$$

$\alpha_i$ is the Lagrange Multiplier; $y_i$ a classification made by using a hyperplane and indicating inside or outside the fence area; b is a constant.

Moreover, the decision function of the SVM algorithm is represented by a matrix

$$\mathcal{D}(\vec{x}_t) = A y_{1\times200} K_{200\times1} + b;$$

besides, although the above-mentioned decision function uses 200 training data items as an example, it is possible to adjust the number in practice based on classification accuracy, computation load, memory capacity, or the like.

Each

$$\vec{x}_i$$

or

$$\vec{x}_t$$

indicates a data vector containing four signal transmitters of the transmitted signals, RSSI-1, RSSI-2, RSSI-3, RSSI-4.

When training the hyperplane model, the in-field actual corrections can be performed based on the road studs and the ground lamps installed around the fence areas. For example, ten shared bicycles may be parked inside the fence area, and at least two shared bicycles may be randomly placed outside the fence area; for example, two bicycles are placed outside and "above" (as shown in the Figure) the fence area, two bicycles are placed outside and "under" the fence area, three bicycles are placed outside and on right side of the fence area, and three bicycles are placed outside and on left side of the fence area. The RSSI-1, RSSI-2, RSSI-3, RSSI-4 received by each bicycle's electronic vehicle identification are transmitted to the ground lamp, received by the ground lamp, thereby establishing the four-dimensional space of the RSSI-1, RSSI-2, RSSI-3 and RSSI-4; then, based on the SVM algorithm, training the hyperplane model for determining the outside and inside of the fence area. Next, the acquired hyperplane model is stored in the ground lamp so as to complete the construction of the electronic fence system.

Herein, the test data set includes the following materials:

The data for the ten bicycles parked in the fence area may include B1 (R1, R2, R3, R4), B2 (R1, R2, R3, R4), B3 (R1, R2, R3, R4), B4 (R1, R2), R3, R4), B5 (R1, R2, R3, R4), B6 (R1, R2, R3, R4), B7 (R1, R2, R3, R4), B8 (R1, R2, R3, R4), B9 (R1, R2, R3, R4) and B10 (R1, R2, R3, R4);

Data for the two bicycles parked "above" and outside the fence area include BU1 (R1, R2, R3, R4) and BU2 (R1, R2, R3, R4);

Data for the two bicycles parked "under" and outside the fence area include BD3 (R1, R2, R3, R4) and BD4 (R1, R2, R3, R4);

Data for the three bicycles parked on the right side of and outside the fence area include BR5 (R1, R2, R3, R4), BR6 (R1, R2, R3, R4), BR7 (R1, R2, R3, R4); and

Data for the three bicycles parked on the left side of and outside the fence area include BL8 (R1, R2, R3, R4), BL9 (R1, R2, R3, R4) and BL10 (R1, R2, R3, R4).

So, totally 20 bicycles are arranged for testing.

According to an embodiment of the present invention, the signal receiver can be integrated in the electronic vehicle identification, and the electronic vehicle identification is further installed with an accelerometer, such that the electronic vehicle identification is monitored by the accelerometer to turn on the signal receiver when the vehicle stops its movement in order to scan the signals coming from each road stud and ground lamp, and then the scanned signals can be broadcasted to the ground lamp.

That is, when the shared bicycle is in use, since the electronic vehicle identification includes an accelerometer, once it enters the vicinity of the electronic fence system and stops nearby, the accelerometer detects that the speed of the shared bicycle is zero, and the electronic vehicle identification can turn on the signal receiver, e.g., the Bluetooth receiving function, and start to scan RSSI-1, RSSI-2, RSSI-3, RSSI-4, and then broadcast to the ground lamp. Subsequently, the ground lamp determines whether the bicycle is currently outside the fence area or inside the fence area according to the hyperplane model about the inside of the fence area and the outside of the fence area, and then informs the electronic vehicle identification to allow the return of the shared bicycle.

Herein, the ground lamp can operate in the dual mode, the three road studs all work in the broadcast mode, while the electronic vehicle identification works in the Master mode.

In another embodiment of the present invention, the remained three road studs can be also designed as ground lamps in order to become scanners, and the three ground lamps can be of oriented Bluetooth dual-mode (not dual Bluetooth); in addition, and the ground lamp that interacts with the electronic vehicle identification needs to apply dual Bluetooth and LORA/NBIOT communication methods.

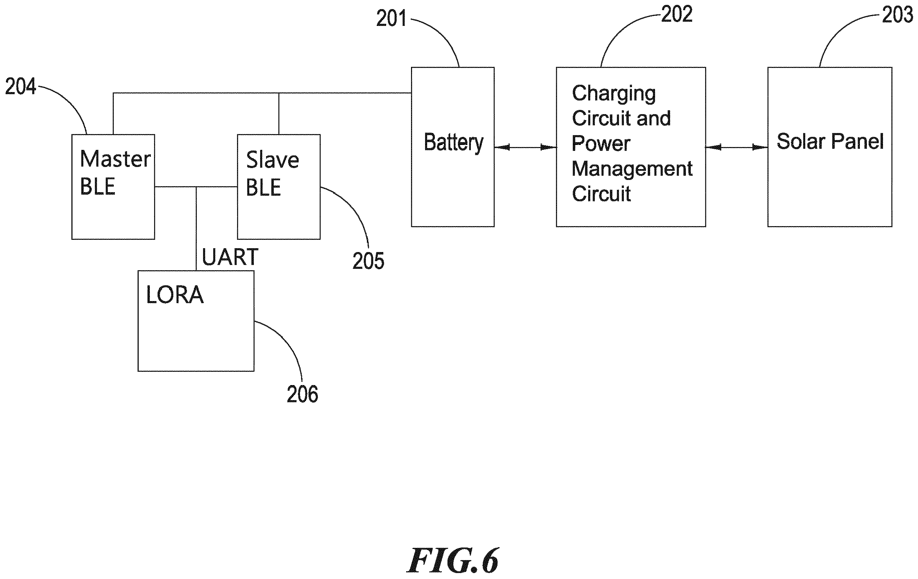

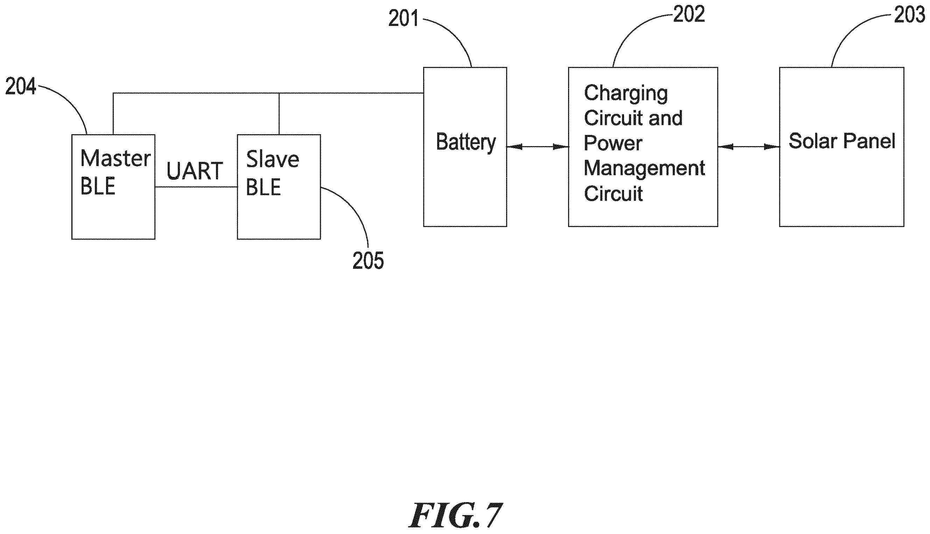

In the embodiment of the present invention, as shown in Figures 6 and 7, the signal transmitter 20 (a ground lamp, e.g., a Bluetooth ground lamp) is further provided with a battery 201 and a charging control circuit 202, in which the charging control circuit 202 converts solar energy into electrical energy by means of a solar panel 203 so as to charge the battery 201.

On one hand, in Figure 6, when the signal transmitter 20 (for example, a ground lamp) needs to adopt the dual Bluetooth and LORA communication methods, the battery 201 can supply electric power respectively to the main Bluetooth module 204, the slave Bluetooth module 205 and the LORA module 206, in which the main Bluetooth module 204, the slave Bluetooth module 205 and the LORA module 206 mutually communicate by means of a UART (Universal Asynchronous Receiver/Transmitter) method.

On the other hand, shown in Figure 7, when the signal transmitter 20 (a ground lamp, such as a Bluetooth ground lamp) needs to adopt the dual Bluetooth communication mode, the battery 201 can supply power respectively to the main Bluetooth module 204 and the slave Bluetooth module 205, and the main Bluetooth module 204 and the slave Bluetooth module 205 mutually communicate via the UART method.

According to an embodiment of the present invention, as shown in Figure 3, when the signal transmitter is arranged in the form of a ground lamp, the ground lamp is to be installed under the ground, which can reduce the interference of secondary reflection and enhance the stability of the RSSI.

Moreover, the electronic vehicle identification can be configured to use a single broadcast channel, so as to make the broadcast channel of each electronic vehicle identification interlaced as much as possible, thereby that the ground lamp can quickly receive the broadcast from each electronic vehicle identification multiple times; additionally, because the individual electronic vehicle identification has a fixed channel frequency and a fixed wavelength, the broadcast packet of the same electronic vehicle identification received multiple times can exhibit a stable RSSI.

To more selectively avoid misjudgment of electronic vehicle identifications outside the fence area, each ground lamp can be installed with a directional antenna and an omnidirectional antenna; that is, a directional antenna can be installed in each ground lamp. For example, in addition to the original omnidirectional antenna, the A ground lamp is attached with a directional antenna toward the fence area; similarly, the directional antenna attached to the B ground lamp is also towards the inside of the fence area. Since the outer casing of the ground lamp is large enough to make the directional antenna face the fence area, rather than facing upwards, for the electronic vehicle identification placed on the left side of the ground lamp A, the omnidirectional antenna of the ground lamp A will get a very strong RSSI, but the installed directional antenna should achieve a very low RSSI, because the electronic vehicle identification is located on the rear side of the directional antenna, while the B ground lamp can read the electronic vehicle identification, but at a great distance. In this way, the electronic vehicle identification outside the fence area can be accurately identified, which greatly reduces the misjudgment.

Moreover, the directional antenna needs to be properly designed so as to reduce false positives by adjusting the field type and gain thereof. The omnidirectional antenna installed in the ground lamp covers a communication connection range of more than ten meters, the directional antenna set up in the ground lamp covers a range of about six meters, and the gain in the zero direction is the highest, up to six meters, deviated from the zero direction, and its gain is symmetrically reduced. As a result, as long as the electronic vehicle identification falls more than one meter above or below the fence area, the directional antenna may not detect, but the omnidirectional antenna still can. But the RSSI is still five meters away from the omnidirectional antenna of the electronic vehicle identification, and there is still +/-1 meter error, so the calculation may misjudge the electronic vehicle identification locating outside the fence area in a possibility of 50%. At this moment, suppose the directional antenna in the A ground lamp or the B ground lamp detects the electronic vehicle identification, it can be confirmed that the electronic vehicle identification is in the fence area, and in case neither the directional antenna of the A ground lamp nor the directional antenna of the B ground lamp detects it, then the possibility of the electronic vehicle identification locating within the fence area can be excluded.

In this case, the A and B ground lamps can be respectively installed in the middle locations on the left and right sides of the electronic fence system, and these two ground lamps installed on the two sides of the omnidirectional antenna can communicate the detected electronic vehicle identification data with each other, so that the possible location of the electronic vehicle identification can be derived via comprehensive calculations, and then narrowing the range and eliminating impossible positions through the directional antenna, thereby improving the recognition accuracy of the electronic fence system.

Herein, this additional plurality of directional antennas can also compare their RSSI with the RSSI of the omnidirectional antenna, thus conjunctively making decisions and greatly reducing wrong determination results.

An electronic fence system according to an embodiment of the present invention defines a fence area having a boundary by providing a plurality of signal transmitters on the ground, and one of the plurality of signal transmitters is configured in the form of a ground lamp which stores a hyperplane model for determining the inside and the outside of the fence area; in addition, the signal receiver is set up on a vehicle and configured to receive the transmission signals coming from each of the plurality of signal transmitters, and sends the signals of each signal transmitter to the electronic vehicle identification on the vehicle, the electronic vehicle identification can wirelessly communication with the ground lamp to transmit the transmission signals of each signal transmitter to the ground lamp, and the ground lamp determines whether the vehicle is within the fence area according to the received signals of signal transmitters and the hyperplane model. Therefore, the recognition accuracy can be improved, the installation is simple, easy to maintain, and the costs can be greatly reduced, which brings great convenience to the user for returning the borrowed vehicle.

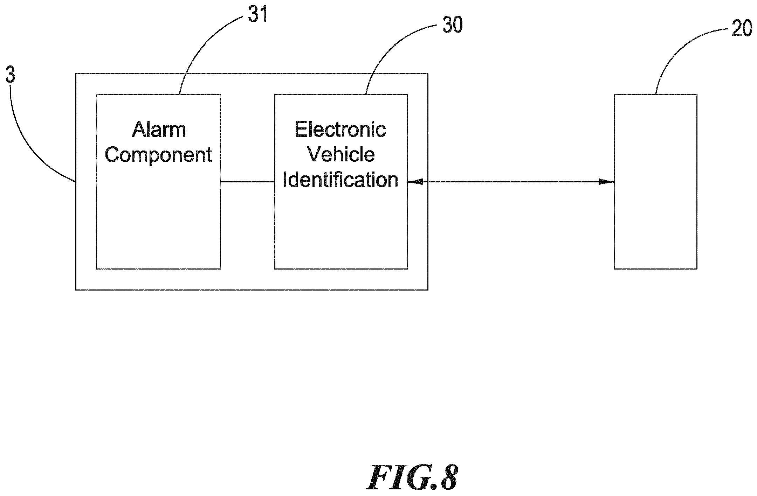

Also, another embodiment of the present invention provides an electronic fence system alarm system, as shown in Figure 8, wherein the electronic fence system alarm system comprises the above-described signal transmitter 20 and the vehicle 3. The vehicle 3 is provided with an electronic vehicle identification 30 and an alarm component 31, and the electronic vehicle identification 30 is connected to the alarm component 31, wherein, after the vehicle 3 has been parked in the fence area, the signal transmitter 20 (a ground lamp, for example, a Bluetooth ground lamp) is kept in a connection state with the electronic vehicle identification 30, and an alarm prompt can be issued by the electronic vehicle identification 30 controlling the alarm component 31 when it is judged that the vehicle 3 is illegally dragged away from the fence area.

In addition, an accelerometer can be installed in the electronic vehicle identification 30, and the electronic vehicle identification 30 can detect that the vehicle 3 is moved by means of the accelerometer when the vehicle is not unlocked, and can inform the ground lamp that the vehicle 3 has been illegally moved by wirelessly communicating with the ground lamp, such that the ground lamp can correctly determine whether the vehicle 3 is illegally dragged out of the fence area.

Herein the electronic vehicle identification can read the value of the accelerometer every 0.5 seconds in order to determine whether the change exceeds a range, or the value exceeds the prescribed value, and the calculation method may be, e.g., the sum of three-axis absolute values, or the square root of the sum of squares, and in case it exceeds the predetermined threshold, the Bluetooth broadcast function will be activated to establish communications with the ground lamp, which is mainly for saving power consumption. So the electronic vehicle identification can apply an accelerometer to detect whether the vehicle, such as a shared bicycle, is moved.

As an example, the electronic vehicle identification on the shared bicycle parked in the fence area is continuously connected with the ground lamp, and once the bicycle is illegally dragged off the fence area, indicating the connection is not maintained, but becoming offline, the ground lamp will control the alarm component installed on the bicycle via the electronic vehicle identification thereby automatically activating the alarm component, e.g., a buzzer, to issue an alarming sound.

Exemplarily, the accelerometer on the shared bicycle is used to detect whether the bicycle is moved after the bicycle has been parked. When it is detected that the bicycle is moved but the bicycle lock is not unlocked, the electronic vehicle identification will be notified to trigger the Bluetooth license plate to establish a connection with the ground lamp in order to notify the ground lamp that the bicycle of this electronic vehicle identification has been illegally moved. As such, once the bicycle is illegally towed off the fence area, the buzzer on the bicycle will automatically sound a beep as long as it leaves the connection range.

Moreover, according to an embodiment of the present invention, after the vehicle is parked in the fence area, the electronic vehicle identification broadcasts the scanned transmission signal to the ground lamp every first preset time period; and when the vehicle is borrowed from the fence area and operates in the running status, the electronic vehicle identification broadcasts the scanned transmission signal to the ground lamp installed on the roadside every second preset time period.

Herein, the second preset time period may be greater than the first preset time period, for example, the second preset time period may be 10 seconds.

The ground lamp can record the location information of the borrowed vehicle according to the received transmission signal, and wirelessly communicate with the cloud server to send the location information of the borrowed vehicle to the cloud server so that the cloud server can track the borrowed vehicle.

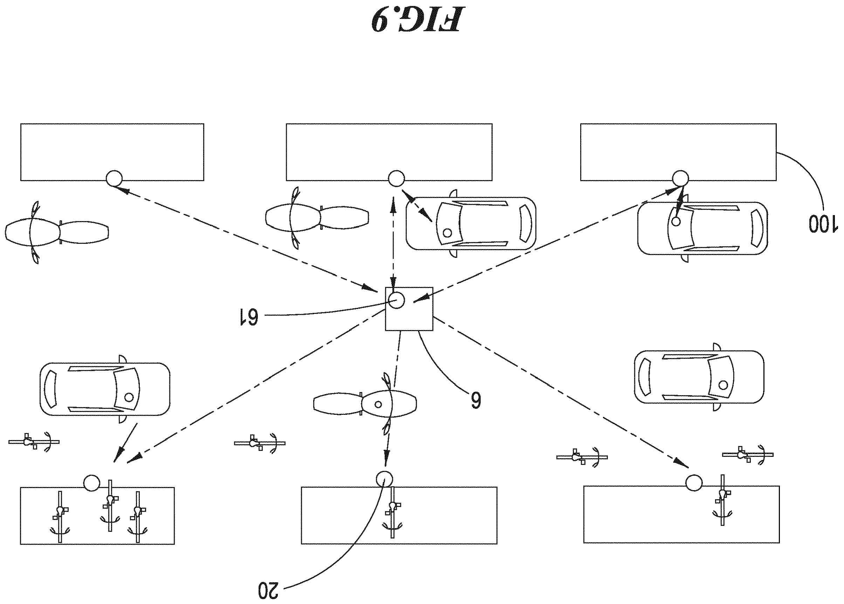

Exemplarily, as shown in Figure 9, when a vehicle, such as a shared bicycle, a shared locomotive, a shared electric vehicle or the like, is borrowed from the electronic fence system, the electronic vehicle identification may be scanned at regular intervals during riding. The transmitted signal can be broadcasted to the ground lamp 61 of the roadside gateway 6 such that the ground lamp can upload the location of the borrowed bicycle to the cloud which can record the whereabouts of the borrowed bicycle. If necessary, position tracking process can be performed when the bicycle slows down (the accelerometer can detect this) and approaches an electronic fence system.

According to an embodiment of the present invention, the electronic vehicle identification further monitors its own power and extends the first preset time period or the second preset time period to reduce the broadcast frequency when the power is lower than a preset value.

Specifically, according to the power monitoring readings, the power can be measured every hour, and if the power is lower than a first preset power, the fixed duration of the first preset time period or the second preset time period be doubled; If the power is lower than a second preset power, the fixed duration of the first preset time period or the second preset time period can be extended by four times, wherein the second preset power is smaller than the first preset power. Meanwhile, the electronic vehicle identification can also send a broadcast signal to the mobile phone or the ground lamp, thereby notifying the current state of the power and requesting appropriate processes.

For the alarm system of the electronic fence system according to the embodiment of the present invention, since the electronic vehicle identification and the alarm component are installed on the vehicle, when the vehicle is parked in the fence area, the ground lamps of the electronic fence system can be kept in a connection state with the electronic vehicle identification, and in case it is determined that the vehicle has been illegally dragged away from the fence area, the alarm component can be controlled by the electronic vehicle identification to order to issue an alarm prompt, such that it is possible to enable effective monitoring of the vehicle parked in the electronic fence system so as to prevent theft events, thus offering greatly improved security.

In the embodiment of the present invention, the Bluetooth road stud can broadcast 5 times or 2 times per second, which can be determined according to the actual time period, such as busy commute time (5 times per second), non-working time (2 times per second), in which the communication protocol of the road stud can be shown in Table 1 below.

Table 1 - Road stud Broadcast Data Packet

| byte[0-5] | Road stud Broadcast Date byte[2-20] | | | |
|---|---|---|---|---|
| Mode (6 bytes) | Person (6 bytes) | Time (1 byte) | Place (6 bytes) | Object (3 bytes) |
| ID Code: $% btag | MAC address | Second | Longitude: $x_1x_2x_3x_4x_5x_6$ Latitude: $y_1y_2y_3y_4y_5y_6$ | $\underline{x_3x_4}$ $\underline{y_3y_4}$-1 $\underline{x_3x_4}$ $\underline{y_3y_4}$-2 $\underline{x_3x_4}$ $\underline{y_3y_4}$-$y_3$-3 |
| Binary btag Identifier 4 bytes | HEX | BCD | Longitude and Latitude: BCD Road stud Installation Location | $x_3x_a$ $y_3y_4$ First two codes of ground lamp's $\overline{longitude}$ and latitude -1 left -2 right -3 up |

Moreover, the broadcast data packet of the road stud provided in the form of a ground lamp can be described as Table 2 below.

Table 2 - Road stud (included in the ground lamp) Broadcast Data Packet

| byte[0-5] | Road stud (Included in Ground lamp) Broadcase Data byte[2-20] | | | | |
|---|---|---|---|---|---|
| Mode (6 bytes) | Person (6 bytes) | Time (1 byte) | Place (6 bytes) | Object (3 bytes) | Master |
| ID Code: $% | MAC address | Second | Longitude: $x_1x_2x_3x_4x_5x_6$ | $\underline{x_3x_4}$ $\underline{y_3y_4}$-4 | MAC address |
| btag | | | Latitude: $y_1y_2y_3y_4y_5y_6$ | | (Ground lamp) |
| Binary btag Identifier 4 bytes | HEX | BCD | Longitude and Latitude: BCD Road stud Installation Location | $x_3x_4$ $y_3y_4$ First two codes of ground $\overline{lamp's}$ longitude and latitude -4 Under (Ground lamp) | HEX |

During the riding, in case the acceleration is higher than a set value, the shared bicycle scans at a regular interval (scanning for 1 second per 5 seconds) or does not scan. Or otherwise, the vehicle number can be broadcasted so the roadside ground lamp can receive it, thus confirming the bicycle has been borrowed in order to follow the shared bicycle.

When the acceleration is reduced from large to small, or less than a prescribed value, and lasts for more than 1 second, it is presumed that there is an intention to park the bicycle, thus triggering the Bluetooth function for fast scanning, continuously scanning for 2 seconds, and it is expected that each road stud of each electronic fence system must collect at least 5 data, having them averaged and rounded up, and then sending them to the mater Bluetooth module in the ground lamp. The electronic vehicle identification can know the MAC address of the master Bluetooth module in the ground lamp from the aforementioned Table 2. The communication protocol of the connection is shown in Table 3 below.

Table 3 - Data Packet of Electronic vehicle identification Connecting Ground lamp

| byte[0-5] | Electronic vehicle identification Connection Information byte[2-19] | | |
|---|---|---|---|
| Mode (6 bytes) | Person (6 bytes) | Time (1 byte) | Object (4 bytes) |
| ID Code: | MAC address | Second | RSSI-1 |

(continued)

| byte[0-5] | Electronic vehicle identification Connection Information byte[2-19] | | |
|---|---|---|---|
| Mode<br>(6 bytes) | Person<br>(6 bytes) | Time<br>(1 byte) | Object<br>(4 bytes) |
| $%<br>"rssi" | | | RSSI-2<br>RSSI-3<br>RSSI-4 |
| Binary rssi Identifier 4 bytes | HEX | BCD | Each RSSI needs one byte |

After the electronic vehicle identification receives the notification from the ground lamp and confirms that the bicycle can be returned in the fence area, the data packet of the connected Bluetooth bicycle lock is as shown in Table 4 hereunder.

Table 4 - Data Packet of Electronic vehicle identification Connecting Bluetooth Bicycle Lock

| byte[0-5] | Electronic vehicle identification Connection Information byte[2-19] | | | |
|---|---|---|---|---|
| Mode<br>(6 bytes) | Person<br>(6 bytes) | Time<br>(1 byte) | Place<br>(6 bytes) | Object<br>(1 bytes) |
| ID Code:<br>$%<br>lock | MAC address | Second | Longitude: $x_1x_2x_3x_4x_5x_6$<br><br>Latitude: $y_1y_2y_3y_4y_5y_6$ | YES |
| Binary Lock Identifier 4 bytes | HEX | BCD | Longitude and Latitude:BCD Ground lamp Installation Location | 1 Unlockable 0 Not unlockable |

After the return of the shared bicycle, the electronic vehicle identification and the ground light are connected for determine whether the shared bicycle is stolen. The communication protocol applied between the electronic vehicle identification and the ground lamp is shown in Table 5 below.

Table 5 - Data Packet of Electronic vehicle identification Connecting Ground lamp

| byte[0-5] | Electronic vehicle identification Connection Information byte[2-19] | | | |
|---|---|---|---|---|
| Mode | Person | Time | Place | Object |
| (6 bytes) | (6 bytes) | (1 byte) | (6 bytes) | (1 bytes) |
| ID Code: $% safe | MAC address | Second | Longitude: $x_1x_2x_3x_4x_5x_6$<br>Latitude: $y_1y_2y_3y_4y_5y_6$ | Illegal theft |
| Binary safe Identifier 4 bytes | HEX | BCD | Longitude and Latitude:<br><br>BCD<br>Ground lamp Installation Location | 1 Illegal theft 0 Safe |

In an embodiment of the present invention, after the electronic vehicle identification sends out the RSSIs collected from the four road studs to the ground lamp, it switches to the slave mode, and waits for the connection of the ground lamp to notify whether the bicycle can be returned; meanwhile, the ground lamp uses the SVM algorithm to determine whether the electronic vehicle identification is located at the inside of the fence area or the outside of the fence area, and uses the connection to inform the electronic vehicle identification of the information. The communication protocol is shown in Table 6 below.

Table 6 - Data Packet of Ground lamp Pushed to Electronic vehicle identification

| byte[0-5] | Connection Data byte[2-19] | | | |
|---|---|---|---|---|
| Mode<br>(6 bytes) | Person<br>(6 bytes) | Time<br>(1 byte) | Place<br>(6 bytes) | Object<br>(1 byte) |
| ID code: $# inin | MAC address | Second | | Inside or outside fence area |
| Binary inin Identifier 4 bytes | HEX | BCD | | Inside fence area value 1 Outside fence area value 0 |

When the ground lamp uploads the data to the cloud, it mainly uses the NBIOT method to upload thereto, which should include: the report of safety and bicycle passing (sent out once after 10-seconds accumulation), the report of bicycle parking (sent out within 1 second), the report of bicycle lending (sent out within 1 second), and the report of bicycle theft (sent out within 1 second). The communication protocol thereof is shown in Tables 7 - 10 as below.

Table 7 - Data Packet of Ground lamp Uploading to Cloud (Bicycle Lending)

| byte[0-1] | NBIOT byte[2-40] | | | | |
|---|---|---|---|---|---|
| Mode (6 bytes) | Person (6 bytes) | Time (1 byte) | Place (6 bytes) | Borrow (6 bytes) | Borrow (6 bytes) |
| ID Code: $% rent | MAC address | Second | Longitude: $x_1x_2x_3x_4x_5x_6$<br>Latitude: $y_1y_2y_3y_4y_5y_6$ | MAC address | MAC address |
| Binary rent Identifier 4 bytes | HEX | BCD | Longitude and latitude: BCD Ground lamp Installaton Location | HEX | HEX |

Table 8 - Data Packet of Ground lamp Uploading to Cloud (Bicycle Parking)

| byte[0-1] | NBIOT byte[2-40] | | | | |
|---|---|---|---|---|---|
| Mode (6 bytes) | Person (6 bytes) | Time (1 byte) | Place (6 bytes) | Return (6 bytes) | Return (6 bytes) |
| ID Code: $% retu | MAC address | Second | Longtude: $x_1x_2x_3x_4x_5x_6$<br>Latitude: $y_1y_2y_3y_4y_5y_6$ | MAC address | MAC address |
| Binary retu Identifier 4 bytes | HEX | BCD | Longitude and latitude: BCD Ground lamp Installaton Location | HEX | HEX |

Table 9 - Data Packet of Ground lamp Uploading to Cloud (Safety and Bicycle Passing)

| byte[0-1] | NBIOT byte[2-40] | | | | | | |
|---|---|---|---|---|---|---|---|
| Mode (6 bytes) | Person (6 bytes) | Time (1 byte) | Place (6 bytes) | Pass-by (6 bytes) | Pass-by (6 bytes) | Pass-by (6 bytes) | Pass-by (6 bytes) |
| ID Code: $% repo | MAC address | Second | Longitude: $x_1x_2x_3x_4x_5x_6$<br>Latitude: $y_1y_2y_3y_4y_5y_6$ | MAC address | MAC address | MAC address | MAC address |
| Binary repo Identifer 4 bytes | HEX | BCD | Longitude and latitude: BCD Ground lamp Installaton Location | HEX | HEX | HEX | HEX |

Table 10 - Data Packet of Ground lamp Uploading to Cloud (Bicycle Theft)

| byte[0-1] | | NBIOT byte[2-40] | | | |
|---|---|---|---|---|---|
| Mode (6 bytes) | Person (6 bytes) | Time (1 byte) | Place (6 bytes) | Theft (6 bytes) | Theft (6 bytes) |
| ID Code: $% safe | MAC address | Second | Longitude: $x_1x_2x_3x_4x_5x_6$<br><br>Latitude: $y_1y_2y_3y_4y_5y_6$ | MAC address | MAC address |
| Binary safe Identifier 4 bytes | HEX | BCD | Longitude and latitude: BCD Ground lamp Installaton Location | HEX | HEX |

Furthermore, in one embodiment of the present invention, the Bluetooth road stud can take the specifications of Table 11 shown below.

Table 11 - Specification Table of Bluetooth Road stud

| Method of Use | Mounted on the ground |
|---|---|
| Bluetooth Module | Bluetooth 4.2/5.0, connection distance of at least 20m |
| Bluetooth Antenna | Highly directional antenna |
| OAD | YES |
| Input Voltage | 4.5V, convertible to 3.3V DC to provide power to Bluetooth module |
| Output Signal | -- |
| Size (including housing) | Diameter 100 mm x 80 mm |
| Weight | 100g |
| Solar Panel | 12 cm x 12 cm |
| Battery Capacity | 5000 mAh (optional) |

The ground lamp can adopt the specification shown in Table 12 as below.

Table 12 - Specification Table of Ground lamp

| Method of Use | Mounted on the ground |
|---|---|
| Bluetooth Module | Bluetooth 4.2/5.0, connection distance of at least 20m |
| Bluetooth Antenna | Highly directional antenna |
| LORA or NBIOT | Power 1 W, communication distance of at least 1 kilometer |
| OAD | YES |
| Input Voltage | 4.5V, convertible to 3.3V DC to provide power to Bluetooth module |
| Output Signal | -- |
| Size (including housing) | Diameter 200 mm x 80 mm |
| Weight | 100g |
| I/O Scalability | UART and 4 I/P pins for optional external sensors |
| Solar Panel | 12 cm x 12 cm |
| Battery Capacity | 5000 mAh (optional) |
| Built-in Positioning SDK | YES |
| PetaCom MESH | YES, requiring conjunctive bwRouter and cloud |

Also, the electronic vehicle identification can apply the specification shown in Table 13 as below.

Table 13 - Specification Table of Electronic vehicle identification

| Method of Use | Installed on bicycles, locomotives and cars as electronic vehicle identification |
| --- | --- |
| Bluetooth Module | Bluetooth 4.2/5.0, connection distance of at least 20m |
| OAD | YES |
| Input Voltage | 4.5V, convertible to 3.3V DC to provide power to Bluetooth module |
| Output Signal | -- |
| Size (including housing) | 50 mm x 30 mm x 3 mm |
| Weight | 5 g |
| I/O Scalability | UART and 4 I/P, and a built-in accelerometer |
| Solar Panel | 50 mm x 30 mm x 0.3 mm |
| Battery Capacity | 54 mAh (optional) |
| Power Saving Function | -- |
| Built-in Positioning SDK | YES |
| PetaCom MESH | YES, requiring conjunctive bwRouter and cloud |

In summary, the electronic fence system of the embodiments according to the present invention can define a fence area having a boundary by means of installing a plurality of signal transmitters on the ground, such that it is possible to determine whether a vehicle, e.g., a shared bicycle, is located in the fence area by using RSSI information, which not only enables high recognition accuracy, but also is simple to install and easy to maintain, and allows reduced costs.

Those skilled ones in the art will appreciate that the embodiments of the present invention can be provided as methods, systems, or computer program products. Accordingly, the present invention may take the form of a fully hardware embodiment, a fully software embodiment, or an embodiment combining both soft and hardware features. Moreover, the present invention may adopt the form of one or more computer program products implemented on the computer usable storage media (including, but not limited to, disk memory, CD-ROM, optical memory, etc.) containing computer executable program codes.

The present invention has been described as above with reference to flowchart illustrations and/or block diagrams of methods, devices (systems), as well as computer program products in accordance with the embodiments of the present invention. It should be appreciated that each process and/or block in the flowchart illustrations and/or block diagrams, as well as combinations of processes and/or blocks in the flowchart illustrations and/or block diagrams, can be implemented by computer program instructions. Such computer program instructions can be provided to a processor of a general purpose computer, a special purpose computer, an embedded processor or other programmable data processing device in order to produce a machine so that, through the instructions executed by the processor in a computer or other programmable data processing device, it is possible to generate a device capable of implementing the functions specified in one or more processes of the flowcharts and/or one or more blocks of the block diagrams as previously described.

In addition, these computer program instructions can be stored in a computer readable memory which can boot a computer or other programmable data processing device in order to operate in a particular approach, such that the instructions stored in the computer readable memory can generate a manufacture product having the instruction means capable of implementing the functions specified in one or more processes of the flowcharts and/or one or more blocks of the block diagrams as previously described.

Moreover, these computer program instructions can be also loaded onto a computer or other programmable data processing device so as to perform a series of operational steps on a computer or other programmable device to produce computer-implemented processes on a computer or other programmable device. As such, instructions executed on a computer or other programmable device provide steps for implementing the functions specified in one or more processes of the flowcharts and/or one or more blocks of the block diagrams as previously described.

It should be noticed that, in the Claims, any reference signs placed between parentheses should not be construed as limitations. The word "comprising" does not exclude the presence of the components or steps that are not listed in the Claims. The word "a" or "an" preceding a component does not exclude the presence of a plurality of such components. The present invention can be effectively embodied by means of a hardware comprising a number of different components

15

and by means of an appropriately programmed computer. In the Claims where several means are enumerated, some or all of these means can be embodied by the same hardware item. The use of the words "first", "second", and "third", etc. does not denote any order. These words can be interpreted as names.

While the preferred embodiments of the present invention have been described, it will be apparent that those skilled ones in the art can make further changes and modifications to such embodiments. Therefore, it is intended that the appended claims should be interpreted as covering the preferred embodiments as well as all changes and modifications that fall within the scope of the present invention.

Apparently, those skilled ones in the art can make various modifications and variations to the present invention without departing from the spirit and scope of thereof. Consequently, if such modifications and variations with respect to the present invention fall within the scope of the Claims and the equivalents thereof in the present invention, it is intended that the present invention also covers the modifications and variations.

Besides, in the description of the present invention, it is to be understood that the terms "first" and "second" are used merely for descriptive purposes and are not to be considered as concerning the quantity of the indicated or implied relative importance or implicitly indicated technical features. Thus, the features defining "first" and "second" may either explicitly or implicitly include one or more of the features. Moreover, unless specifically defined, the meaning of "plurality" is two or more in the descriptions of the present invention.

In the present invention, unless otherwise specifically regulated and defined, terms such as "installation," "connection," "attachment," or "fixation" etc., are to be comprehensively understood. For example, it may be a fixed connection, or may be a detachable connection, or integrated; it may be a mechanical connection or an electrical connection; it may be directly connected, or may be indirectly connected via an intermediate medium, and may be an internal communication of two components or otherwise an interaction of two components. For those of ordinary skills in the art, the specific meanings of the aforementioned terms illustrated in the present invention can be understood on a case-by-case basis.

In the present invention, unless otherwise specifically regulated and defined, a first feature is "on" or "below" a second feature may indicate the direct contact of the first and second features, or the first and second features may be in indirect contact by way of an intermediary media. Moreover, a first feature is "above", "on" and "over" a second feature may be that the first feature is directly above or slantingly above the second feature, or merely indicates that the level of the first feature is higher than the one of the second feature. Similarly, a first feature is "below", "under" and "beneath" a second feature may be that the first feature is directly under or slantingly under the second feature, or merely indicates that the level of the first feature is lower than the one of the second feature.

In the present specification, the descriptions referring to the terms "an embodiment", "some embodiments", "examples", "specific examples" or "some examples" and the like are meant to be described in connection with the embodiments or examples whose specific features, structures, materials, or characteristics etc. are included in at least an embodiment or example of the invention. Meanwhile, in the present specification, the schematic representations of the above terms should not be construed as necessarily referring to the same embodiments or examples. Moreover, the described particular features, structures, materials, or characteristics may be combined in a suitable manner in any one or more embodiments or examples. In addition, those skilled ones in the art can combine and integrate such different embodiments or examples described in the specification as well as the features of such different embodiments or examples without departing from the scope of the present invention.

Although the embodiments of the present invention have been shown and explained in the aforementioned descriptions, it is understood that such embodiments are merely illustrative and are not to be construed as limiting. That is, variations, modifications, alterations and variations of the above-described embodiments may be made by those skilled ones in the art within the scope of the invention.

**Claims**

1. An electronic fence system, comprising:

   a plurality of signal transmitters (10, 20) disposed on the ground to define a fence area (100) having a boundary;
   a signal receiver (301) disposed on a vehicle (3) and the signal receiver (301) is configured to receive transmission signals sent by each of the signal transmitters (10, 20); and
   a processor (302), connected to the signal receiver (301) and configured to determine whether the vehicle (3) is in the fence area (100) according to the transmitted signal strength of each of the signal transmitters (10, 20) received by the signal receiver (301).

2. The electronic fence system according to Claim 1, wherein the plurality of signal transmitters (10, 20) are disposed around the fence area (100) in the form of road studs or ground lamps, and the signal transmitters (10, 20) can be components that simply transmit signals or components that can transmit and receive signals.

3. The electronic fence system according to Claim 2, wherein the signal transmitters (10, 20) are configured with a directional antenna (101) for transmitting a positioning signal towards the inside of the fence area (100).

4. The electronic fence system according to Claim 1, wherein the vehicle (3) is a shared transportation tool, which is selected from the group consisting of electrically or non-electrically driven bicycles, locomotives, wheelchairs or scooters.

5. The electronic fence system according to Claim 4, wherein the shared transportation tool is a shared bicycle installed with an electronic vehicle identification (30) and the signal receiver (301) and the processor (302) are both integrated in the electronic vehicle identification (30), such that, when the intensity of each transmitted signal received by the electronic vehicle identification (30) exceeds a preset threshold, it is determined that the shared bicycle is in the fence area and the shared bicycle is allowed to be locked and returned.

6. The electronic fence system according to Claim 5, wherein, after having received the intensity of each transmitted signal, the electronic vehicle identification (30) transmits into a classifier in order to determine whether the shared bicycle is located in the fence area (100) thereby allowing the shared bicycle to be locked and returned, and the classifier can be selected from: Linear classifiers (Fisher's linear discriminant, Logistic regression, Naive Bayes classifier, Perceptron); Support vector machines (Least squares support vector machines); Quadratic classifiers; Kernel estimation (k-nearest neighbor); Boosting (meta-algorithm); Decision trees (Random forests); Learning vector quantization; Neural networks; Deep learning.

7. The electronic fence system according to Claim 5, wherein the electronic vehicle identification (30) further wirelessly communicates with a mobile device so that, after the shared bicycle has been successfully locked and returned, it can send a bicycle-return-success-information to the mobile device.

8. The electronic fence system according to Claim 7, wherein the mobile device further wirelessly communicates with a cloud server so as to send a shared bicycle information indicating a successful bicycle return to the cloud server, and the shared bicycle information indicating a successful bicycle return includes the positioning information of the shared bicycle.

9. The electronic fence system according to Claim 8, wherein the signal transmitters (10, 20) can be configured in the form of road studs or ground lamps, and the signal transmitters (10, 20) wirelessly communicate with the electronic vehicle identification (30) in order to receive the bicycle-return-success-information sent by the electronic vehicle identification (30), and then, by means of the wireless communication with the cloud server, a shared bicycle information indicating a successful bicycle return will transmitted to the cloud server, wherein the shared bicycle information indicating a successful bicycle return includes the positioning information of the shared bicycle.

10. The electronic fence system according to Claim 7, wherein the signal transmitters (10, 20) can be further capable of recording the number of shared bicycles that have been parked in the fence area (100), and in case that the number of shared bicycles that have been parked in the fence area (100) reaches a preset maximum parking number, it is possible to prohibit the shared bicycle from being locked and returned in the fence area (100).

11. The electronic fence system according to Claim 5, wherein the electronic vehicle identification (30) can be integrated with the Bluetooth bicycle lock of the shared bicycle in order to operate a shared Bluetooth module or battery.

12. The electronic fence system according to Claim 5, wherein the vehicle (3) is further installed with an alarm component (31), and the electronic vehicle identification (30) is connected to the alarm component (31), and, after the vehicle (3) is parked in the fence area (100), the signal transmitters (10, 20) and the electronic vehicle identification (30) can be maintained in a connection status such that, in case it is determined that the vehicle (3) is illegally dragged away from the fence area (100), the alarm element (31) can be controlled by the electronic vehicle identification (30) to issue alarm prompts.

13. The electronic fence system according to Claim 12, wherein the electronic vehicle identification (30) further includes an accelerometer, and the electronic vehicle identification (30) can monitor the movement of the vehicle (3) by means of the accelerometer, thereby that, in case the moving tool (3) is not unlocked, the vehicle (3) is notified to be illegally moved via the wireless communication with the signal transmitters (10, 20), so that the signal transmitters (10, 20) can determine whether the vehicle (3) is illegally dragged away from the fence area.

14. The electronic fence system according to Claim 13, wherein, after the vehicle (3) is parked in the fence area (100), the electronic vehicle identification (30) broadcasts the scanned transmission signal every first predetermined time period, and when the vehicle (3) is loaned and positioned in the fence area (100) and under an operation state, the electronic vehicle identification (30) broadcasts the scanned transmission signal to other ground lamps (61) disposed at the roadside every second predetermined time period.

15. The electronic fence system according to Claim (14), wherein, the signal transmitters (10, 20) record the location information of the borrowed vehicle (3) in accordance with the received transmission signal, and transmit the location information of the loaned vehicle (3) to the cloud server by means of the wireless communication with the cloud server such that the cloud server can acquire the whereabouts or traces of the borrowed vehicle (3).

**FIG.1**

Signal
Transmitter — 10

100

Signal
Transmitter — 10

Signal
Receiver — 301

Processor — 302

Signal
Transmitter — 10

Signal
Transmitter — 10

*FIG.2A*

FIG.2B

4

10

10

101

**FIG.3**

**FIG.4**

FIG.5

20

1001

52

51

53

61

6

1002

*FIG.6*

FIG.7

## FIG.8

Alarm
Component

Electronic
Vehicle
Identification

3

31

30

20

FIG.9

Europäisches
Patentamt

European
Patent Office

Office européen
des brevets

# EUROPEAN SEARCH REPORT

Application Number

EP 19 21 1150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/369618 A1 (BARNARD CHRIS [US] ET AL) 24 December 2015 (2015-12-24)<br>* abstract *<br>* paragraphs [0095] - [0101] *<br>* paragraphs [0256] - [0266] *<br>* figures 10,11,14 *<br>----- | 1-15 | INV.<br>H04W4/021 |
| A | US 2017/101110 A1 (YOO WONSEOK [KR]) 13 April 2017 (2017-04-13)<br>* abstract *<br>* paragraphs [0003] - [0026] *<br>* paragraphs [0381] - [0409] *<br>* figures 3A,3B *<br>----- | 1-15 | |

TECHNICAL FIELDS
SEARCHED      (IPC)

H04W

The present search report has been drawn up for all claims

| Place of search | Date of completion of the search | Examiner |
|---|---|---|
| Munich | 17 January 2020 | Pandolfi, Alessandra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 19 21 1150

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2020

| Patent document cited in search report | | Publication date | Patent family member(s) | | Publication date |
|---|---|---|---|---|---|
| US 2015369618 | A1 | 24-12-2015 | AU | 2015276998 A1 | 12-01-2017 |
| | | | CA | 2952856 A1 | 23-12-2015 |
| | | | CN | 107155407 A | 12-09-2017 |
| | | | EP | 3158821 A2 | 26-04-2017 |
| | | | JP | 2017526219 A | 07-09-2017 |
| | | | KR | 20170023085 A | 02-03-2017 |
| | | | US | 2015369618 A1 | 24-12-2015 |
| | | | US | 2015373482 A1 | 24-12-2015 |
| | | | US | 2017003136 A1 | 05-01-2017 |
| | | | US | 2017268890 A1 | 21-09-2017 |
| | | | US | 2019353489 A1 | 21-11-2019 |
| | | | WO | 2015195976 A2 | 23-12-2015 |
| US 2017101110 | A1 | 13-04-2017 | CN | 107054245 A | 18-08-2017 |
| | | | EP | 3156291 A1 | 19-04-2017 |
| | | | KR | 20170042142 A | 18-04-2017 |
| | | | US | 2017101110 A1 | 13-04-2017 |

EPO FORM P0459

For more details about this annex : see Official Journal of the European Patent Office, No. 12/82